# EUROPÄISCHE PATENTSCHRIFT

(11) **EP 3 953 921 B1**
(45) Veröffentlichungstag und Bekanntmachung des Hinweises auf die Patenterteilung: **18.12.2024**
(21) Anmeldenummer: 20714591.3
(22) Anmeldetag: 26.03.2020
(51) Int. Cl.: G08B 25/14

(54) **STEUERUNGSEINHEIT FÜR EINE GEFAHRENMELDERZENTRALE, GEFAHRENMELDERSYSTEM UND VERFAHREN ZUM BETRIEB EINER GEFAHRENMELDERZENTRALE**
CONTROL UNIT FOR A HAZARD ALERT CENTER, HAZARD ALERT SYSTEM AND METHOD FOR OPERATING A HAZARD ALERT CENTER
UNITÉ DE COMMANDE POUR UNE CENTRALE DE SIGNALISATION DE DANGER, SYSTÈME DE SIGNALISATION DE DANGER ET PROCÉDÉ POUR FAIRE FONCTIONNER UNE CENTRALE DE SIGNALISATION DE DANGER

(30) Priorität: 12.04.2019 DE 102019109744
(43) Veröffentlichungstag der Anmeldung: 16.02.2022
(73) Patentinhaber: Minimax Viking Patent Management GmbH, 23840 Bad Oldesloe (DE)
(72) Erfinder: KLOTZ, Frieder, 23840 Bad Oldesloe (DE); HIPP, Sabine, 23840 Bad Oldesloe (DE)
(74) Vertreter: Eisenführ Speiser
(86) Internationale Anmeldenummer: PCT/EP2020/058481
(87) Internationale Veröffentlichungsnummer: WO 2020/207807

(56) Entgegenhaltungen:
- WO-A1-2007/025884
- WO-A2-2010/130604
- FR-A1- 2 918 982
- JP-A- S50 104 195
- US-A1- 2003 050 713
- US-A1- 2003 050 713
- US-A1- 2003 097 188
- US-A1- 2003 097 188
- US-A1- 2019 068 394
- US-A1- 2019 068 394
- SUSANA QUILES-DÍAZ ET AL: "Catalytic performance of CuO/Ce 0.8 Zr 0.2 O 2 loaded onto SiC-DPF in NO x -assisted combustion of diesel soot", RSC ADVANCES, vol. 5, no. 22, 1 January 2015 (2015-01-01), pages 17018 - 17029, XP055698698, ISSN: 2046-2069, DOI: 10.1039/C4RA15595E
- C-TEC: "ZFP Touchscreen-Controlled Analogue Addressable Fire Panel", INTERNET CITATION, 15 January 2013 (2013-01-15), pages 1 - 9, XP002736575, Retrieved from the Internet <URL:http://www.c-tec.co.uk/dlfiles/Sales%20PDFs/ZFP_16_page_Brochure_Rev1.pdf> [retrieved on 20150227]
- C-TEC: "ZFP Touchscreen-Controlled Analogue Addressable Fire Panel", INTERNET CITATION, 15 January 2013 (2013-01-15), pages 1 - 9, XP002736575, Retrieved from the Internet <URL:http://www.c-tec.co.uk/dlfiles/Sales%20PDFs/ZFP_16_page_Brochure_Rev1.pdf> [retrieved on 20150227]

## Beschreibung

Die vorliegende Erfindung betrifft eine Steuerungseinheit für eine Gefahrenmelderzentrale, beispielsweise eine Einbruch-, Brandmelder- und/oder Löschsteuerzentrale, ein Gefahrenmeldersystem, vorzugsweise ein Brandmeldersystem, und ein Verfahren zum Betrieb einer Gefahrenmelderzentrale, beispielsweise einer Einbruch-, Brandmelder- und/oder Löschsteuerzentrale.

Gefahrenmeldersysteme, insbesondere Brandmeldersysteme, sind grundsätzlich bekannt. Gefahrenmeldersysteme weisen in der Regel einen Gefahrenmelder und eine signalverarbeitende Steuerungseinheit auf. Der Gefahrenmelder kann beispielsweise ein Brandmelder sein. Gefahrenmelder werden insbesondere zur Erfassung von Gefahrkenngrößen, wie zum Beispiel toxische Gase, Brandgase, Flammen und Funken eingesetzt.

Steuerungseinheiten sind in der Regel in Gefahrenmelderzentralen, beispielsweise Einbruch-, Brandmelder- und/oder Löschsteuerzentralen, vorgesehen. Gefahrenmelderzentralen weisen üblicherweise eine Anzeige- und Bedienkomponente auf. An einer solchen Anzeige- und Bedienkomponente können beispielsweise Konfigurationen vorgenommen werden und/oder eine Zuordnung von Störungen oder Alarmen zu einem zugehörigen Gefahrenmelder vorgenommen werden.

Da es sich bei einer Gefahrenmelderzentrale um eine sicherheitsrelevante Komponente des Gefahrenmeldersystems handelt, ist die im Vorherigen genannte Zuordnung von Störungen oder Alarmen zu einem zugehörigen Gefahrenmelder schnell vorzunehmen. Derzeitige Gefahrenmelderzentralen zeichnen sich jedoch oftmals dadurch aus, dass die Erkennung von Störungen oder Alarmen und auch die Zuordnung dieser zu zugehörigen Gefahrenmeldern zeitaufwendig ist.

Darüber hinaus können die Anzeigen unübersichtlich sein, sodass es einem Benutzer schwerfällt, eine schnelle und sichere Zuordnung der Meldung zu erfassen. Üblicherweise werden die Meldungen in Listenform signalisiert. Jedoch ist gerade die schnelle Erkennung und Zuordnung einer Störung oder einer Gefahr im sicherheitstechnischen Bereich der Gefahrenmeldersysteme von hoher Bedeutung, wobei auch kurze Reaktionszeiten erforderlich sind.

Das Deutsche Patent- und Markenamt hat in der Prioritätsanmeldung zu vorliegender Anmeldung folgenden Stand der Technik recherchiert: US 5,297,252 A und US 2016/0300460 A1.

US 2003/097188 A1 offenbart eine Steuerungseinheit für eine Gefahrenmelderzentrale. Im Detail wird eine Benutzerschnittstelle zur Steuerung und Anzeige von Informationen über Geräte in einem System beschrieben. Die Benutzerschnittstelle ist so konzipiert, dass sie die Bedürfnisse verschiedener Benutzertypen erfüllt. Einem Benutzer, der mit dem System nicht vertraut ist, wird eine angepasste Meldung auf dem Display der Benutzerschnittstelle angezeigt. Einem Benutzer mit begrenzter Erfahrung im Umgang mit der Schnittstelle können ein oder mehrere spezielle Eingabegeräte zur Verfügung gestellt werden, um weitere Informationen über das System zu erhalten. Einem erfahreneren Benutzer steht ein Touchscreen zur Verfügung, mit dem er Geräte über die Benutzerschnittstelle steuern kann.

Vor diesem Hintergrund ist es eine Aufgabe der vorliegenden Erfindung, eine Steuerungseinheit für eine Gefahrenmelderzentrale, beispielsweise eine Einbruch-, Brandmelder- und/oder Löschsteuerzentrale, ein Gefahrenmeldersystem, vorzugsweise ein Brandmeldersystem, und ein Verfahren zum Betrieb einer Gefahrenmelderzentrale, beispielsweise einer Einbruch-, Brandmelder- und/oder Löschsteuerzentrale bereitzustellen, welche einen oder mehrere der genannten Nachteile vermindern oder beseitigen. Ferner ist es eine Aufgabe der Erfindung, eine Lösung bereitzustellen, die eine schnellere Erfassung eines Alarms und/oder einer Störung durch einen Bediener eines Gefahrenmeldersystems ermöglicht.

Gemäß einem ersten Aspekt der Erfindung gemäß Anspruch 1, wird die eingangs genannte Aufgabe gelöst durch eine Steuerungseinheit für eine Gefahrenmelderzentrale, beispielsweise eine Einbruch-, Brandmelder- und/oder Löschsteuerzentrale, wobei die Steuerungseinheit eingerichtet ist, von einem Gefahrenmelder zur Erkennung einer Gefahrensituation ein die Gefahrensituation charakterisierendes erstes Signal zu empfangen,- eine als berührungsempfindlicher Eingabe- und Ausgabebildschirm ausgebildete Benutzerschnittstelle mit einem Anzeigemittel umfasst, das eingerichtet ist, zur Darstellung einer Ruheanzeige und/oder einer Meldungsanzeige, wobei die Ruheanzeige von dem Anzeigemittel angezeigt wird, wenn eine vorbestimmte Zeitdauer keine Interaktion mit einem Bediener der Gefahrenmelderzentrale und der Steuerungseinheit erfolgte, wobei die Meldungsanzeige von dem Bediener aufgerufen wird, wenn dieser bei Anzeigen der Ruheanzeige auf das Anzeigemittel tippt und wobei in der Meldungsanzeige eine Anzahl an Meldungen auf dem Anzeigemittel angezeigt werden, nämlich eine älteste Meldung und eine aktuellste Meldung, wobei weitere Meldungen, die zeitlich zwischen der ältesten Meldung und der aktuellsten Meldung liegen, auf dem Anzeigemittel räumlich zwischen der ältesten Meldung und der aktuellsten Meldung scrollbar anzeigbar sind, und o einer ersten Ereignisanzeige, die einen Hauptabschnitt und einen von dem Hauptabschnitt verschiedenen, in einem unteren Abschnitt des Anzeigebereichs angeordneten ersten Randabschnitt aufweist, wobei der Hauptabschnitt größer als der erste Randabschnitt ist und der erste Randabschnitt weniger als 30 % einer Höhe des Anzeigebereichs einnimmt, wobei die erste Ereignisanzeige ein die Gefahrensituation kennzeichnendes erstes Ereignis in dem Hauptabschnitt anzeigt und die älteste Meldung und die aktuellste Meldung in dem ersten Randabschnitt des Anzeigemittels anzeigt, wobei die Meldungsanzeigen von dem Bediener ferner aufgerufen wird, wenn dieser bei Anzeigen der ersten Ereignisanzeige auf den Hauptabschnitt tippt, und die Steuerungseinheit eingerichtet ist, bei Empfang des ersten Signals das Anzeigemittel derart zu steuern, dass anstatt der Ruheanzeige und/oder der Meldungsanzeige die erste Ereignisanzeige angezeigt wird.

Der Gefahrenmelder ist zur Erkennung einer Gefahrensituation ausgebildet. Der Gefahrenmelder kann beispielsweise ein Brandmelder sein, der vorzugsweise als Rauchmelder oder als Flammenmelder ausgebildet ist.

Der insbesondere nicht zur Steuerungseinheit gehörende Gefahrenmelder ist vorzugsweise ausgebildet, ein die Gefahrensituation charakterisierendes erstes Signal zu erzeugen. Die Steuerungseinheit ist entsprechend eingerichtet, um das erste Signal zu empfangen. Die Steuerungseinheit kann hierfür geeignete Empfangsmittel umfassen.

Die Steuerungseinheit umfasst die Benutzerschnittstelle mit dem Anzeigemittel. Mit dem Anzeigemittel kann die Ruheanzeige und/oder die Meldungsanzeige sowie die erste Ereignisanzeige dargestellt werden. Die Ruheanzeige kann beispielsweise ein Bildschirmschoner sein. Die Steuerungseinheit ist eingerichtet, die Ruheanzeige anzuzeigen, wenn eine vorbestimmte Zeit keine Nutzerinteraktion erfolgte. Darüber hinaus kann die Steuerungseinheit eingerichtet sein, die Ruheanzeige anzuzeigen, wenn die erste Ereignisanzeige eine vorbestimmte Zeit, beispielsweise 1 Stunde, angezeigt wurde.

Die Meldungsanzeige kann mehrere einzelne Meldungen anzeigen. Inhalt einer Meldung kann beispielsweise eine Störung, ein Feuer oder ein Feuervoralarm sein. Die Steuerungseinheit ist derart eingerichtet, dass stets eine älteste Meldung und eine aktuellste Meldung angezeigt werden. Darüber hinaus können weitere Meldungen zwischen der ältesten und der aktuellsten Meldung angezeigt werden. Die Steuerungseinheit ist ferner derart eingerichtet, dass die Anzeige der weiteren Meldungen durch ein Scrollen veränderbar ist und somit eine Vielzahl weiterer Meldungen zwischen der aktuellsten und ältesten Meldung anzeigbar ist. Vorzugsweise sind die Meldungen chronologisch von der ältesten Meldung, die beispielsweise in einem oberen Bereich angeordnet ist, zur aktuellsten Meldung, die beispielsweise in einem unteren Bereich angeordnet ist, angeordnet.

Wenn ein Gefahrenmelder eine Gefahrensituation erkennt, erzeugt dieser vorzugsweise das die Gefahrensituation charakterisierende erste Signal. Die Steuerungseinheit ist so eingerichtet, dass bei Empfang des ersten Signals die erste Ereignisanzeige angezeigt wird. Die erste Ereignisanzeige zeigt das erste Ereignis in dem Hauptabschnitt an, sodass ein Benutzer der Steuerungseinheit das erste Ereignis unmittelbar erkennen kann. Das erste Ereignis kann beispielsweise ein Feuer in einem von dem Gefahrenmelder überwachten Überwachungsbereich sein.

Sobald die erste Ereignisanzeige von dem Anzeigemittel dargestellt wird, werden die älteste Meldung und die aktuellste Meldung in einem ersten Randabschnitt angezeigt. Der erste Randabschnitt ist verschieden von dem Hauptabschnitt. Der Randabschnitt ist insbesondere dadurch gekennzeichnet, dass dieser einen kleineren Teil der Anzeigefläche des Anzeigemittels einnimmt als der Hauptabschnitt.

Der Randabschnitt kann in einem Randbereich des Anzeigemittels angeordnet sein. Beispielsweise kann der erste Randabschnitt links, rechts, oben oder unten angeordnet sein. Die erste Ereignisanzeige umfasst somit die Darstellung des ersten Ereignisses sowie der ältesten und der aktuellsten Meldung.

Für die Darstellung der ersten Ereignisanzeige im Hauptabschnitt kann eine Sperrzeit vorgesehen werden. Während der Sperrzeit bleibt die erste Ereignisanzeige bestehen und es wird keine Ruheanzeige oder Meldungsanzeige dargestellt. Die Sperrzeit kann beispielsweise 1 Stunde betragen.

Der Erfindung liegt die Erkenntnis zugrunde, dass eine schnelle Erfassung einer Gefahrenmeldung durch einen Benutzer einer Steuerungseinheit einer Gefahrenmelderzentrale von Bedeutung für die Effizienz eines Gefahrenmeldersystems sein kann. Insbesondere die schnelle Erfassung einer Gefahrensituation kann die Geschwindigkeit der Reaktion des Benutzers erhöhen und somit Personen- und/oder Sachschaden verringern oder vermeiden. Beispielsweise kann der Benutzer schneller die Entscheidung zur Alarmierung der Feuerwehr treffen, beispielweise indem er das im Folgenden näher erläuterte erste Aktionsmittel betätigt.

Gemäß der Erfindung ist vorgesehen, dass die Benutzerschnittstelle als berührungsempfindlicher Eingabe- und Ausgabebildschirm ausgebildet ist.

Der berührungsempfindliche Eingabe- und Ausgabebildschirm kann beispielsweise als sogenannter Touchscreen ausgebildet sein. Derartige Bildschirme haben den Vorteil, dass die Steuerungseinheit keine oder weniger Knöpfe aufweist, die gegebenenfalls verschleißanfällig sind. Der Ausgabebildschirm ist als Ausgabemittel zu verstehen. Der Eingabebildschirm kann mit dem Ausgabebildschirm überlappend ausgebildet sein. Ein berührungsempfindlicher Eingabe- und Ausgabebildschirm ist außerdem platzsparend.

Gemäß der Erfindung umfasst die Steuerungseinheit ein Meldungsbetätigungsmittel, wobei bei Betätigung des Meldungsbetätigungsmittels das Anzeigemittel derart von der Steuereinheit gesteuert wird, dass anstatt der ersten Ereignisanzeige die Meldungsanzeige angezeigt wird, wobei das Meldungsbetätigungsmittel auf dem Eingabe- und Ausgabebildschirm im Hauptabschnitt, angeordnet ist.

Das Meldungsbetätigungsmittel ist durch den berührungsempfindlichen Eingabe- und Ausgabebildschirm ausgebildet.

Durch die Betätigung des Meldungsbetätigungsmittels kann ein Nutzer der Steuerungseinheit von der ersten Ereignisanzeige zur Meldungsanzeige gelangen. Hierdurch kann der Benutzer von der insbesondere eingängigen, aber vorzugsweise eine geringe Informationsdichte aufweisenden ersten Ereignisanzeige zur Meldungsanzeige mit detaillierten Informationen kommen.

In einer bevorzugten Fortbildung der Steuerungseinheit ist vorgesehen, dass diese umfasst ein erstes Aktionsmittel, wobei die Steuerungseinheit eingerichtet ist, bei Betätigung des ersten Aktionsmittels ein Alarmsignal, insbesondere zur Alarmierung einer Feuerwehr, zu erzeugen und vorzugsweise zu senden, und/oder ein zweites Aktionsmittel, wobei die Steuerungseinheit eingerichtet ist, bei Betätigung des zweiten Aktionsmittels, eine vorbestimmte Wartezeit um eine vorbestimmte Erkundungszeit zu verlängern, und/oder ein drittes Aktionsmittel, wobei die Steuerungseinheit eingerichtet ist, bei Betätigung des dritten Aktionsmittels, ein Erzeugen und/oder Senden eines Alarmsignals zu hemmen.

Die Aktionsmittel können beispielsweise als berührungs- und/oder druckempfindliche Knöpfe an der Benutzerschnittstelle angeordnet sein. Diese können beispielsweise Teil des berührungsempfindlichen Eingabe- und Ausgabebildschirm sein. Die vorbestimmte Wartezeit kann beispielsweise die Zeit sein, die zwischen Eingang des ersten Signals bei der Steuerungseinheit bis zum Senden eines Alarmsignals, beispielsweise zur Alarmierung einer Feuerwehr, verstreichen soll. Erfolgt in dieser Zeit keine Interaktion, wird das Alarmsignal gesendet und die erste Ereignisanzeige bleibt dargestellt.

Wenn während der Wartezeit ein Benutzer mit der Steuerungseinheit agiert, kann dieser das erste Aktionsmittel, das zweite Aktionsmittel oder das dritte Aktionsmittel betätigen. Wenn der Benutzer das zweite Aktionsmittel betätigt, wird die Wartezeit um die vorbestimmte Erkundungszeit verlängert. Die vorbestimmte Erkundungszeit kann von dem Benutzer beispielsweise genutzt werden, um die Gefahrensituation zu verifizieren, beispielsweise indem der Benutzer zu dem entsprechenden Gefahrenmelder gelangt und die Gefahrensituation beurteilt. Die Wartezeit kann beispielsweise 30 Sekunden betragen. Die Wartezeit und die vorbestimmte Erkundungszeit zusammen können beispielsweise maximal 10 Minuten betragen.

Wenn der Benutzer vor Ablauf der Wartezeit zur Steuerungseinheit gelangt und er der Auffassung ist, dass ein Alarmsignal zu erzeugen ist, kann er das erste Aktionsmittel unmittelbar betätigen, sodass das Alarmsignal gesendet wird. Darüber hinaus kann der Benutzer auch das dritte Aktionsmittel betätigen, indem das Erzeugen und/oder Senden eines Alarmsignals gehemmt wird.

In einer weiteren bevorzugten Fortbildung der Steuerungseinheit ist vorgesehen, dass das erste Aktionsmittel, das zweite Aktionsmittel und/oder das dritte Aktionsmittel auf dem Eingabe- und Ausgabebildschirm angeordnet ist, vorzugsweise in einem zweiten Randabschnitt.

Der erste Randabschnitt ist vorzugsweise verschieden von dem zweiten Randabschnitt.

Der erste Randabschnitt ist in einem unteren Bereich beispielsweise als Zeile ausgebildet.

Der zweite Randabschnitt kann beispielsweise als Spalte in einem linken Abschnitt des Anzeigemittels dargestellt sein. Insbesondere ist es bevorzugt, dass der erste Randabschnitt und der zweite Randabschnitt sich nicht überlappen, sodass eine eindeutige Zuordnung der Aktionsmittel zu der damit zu steuernden Funktion gegeben ist.

Ferner ist es bevorzugt, dass die Steuerungseinheit eingerichtet ist, nach einer vorbestimmten Wartezeit nach Empfang des ersten Signals das Alarmsignal, insbesondere zur Alarmierung einer Feuerwehr, zu erzeugen und vorzugsweise zu senden, und vorzugsweise die Steuerungseinheit eingerichtet ist, auf dem Anzeigemittel eine Alarmsignalanzeige darzustellen. Mittels der Alarmsignalanzeige wird einem Benutzer der Steuerungseinheit dargestellt, dass die Feuerwehr bereits gerufen wurde.

Gemäß einer weiteren bevorzugten Ausführungsform der Steuerungseinheit ist diese eingerichtet, ein Entwarnungssignal zu empfangen und bei Empfang des Entwarnungssignals das Anzeigemittel derart zu steuern, dass anstatt der Ereignisanzeige die Ruheanzeige und/oder die Meldungsanzeige angezeigt wird.

Das Entwarnungssignal kann insbesondere zur Quittierung und/oder zum Zurücksetzen genutzt werden.

Gemäß einer weiteren bevorzugten Ausführungsvariante der Steuerungseinheit ist vorgesehen, dass das Anzeigemittel eingerichtet ist, zur Darstellung einer zweiten Ereignisanzeige, die ein zweites Ereignis in dem Hauptabschnitt anzeigt, und/oder zur Darstellung einer dritten Ereignisanzeige, die ein drittes Ereignis in dem Hauptabschnitt anzeigt, wobei die älteste Meldung und die aktuellste Meldung in dem ersten Randabschnitt angezeigt werden, und die Steuerungseinheit eingerichtet ist, ein eine Störung charakterisierendes zweites Signal, insbesondere ein Störungssignal, zu empfangen und/oder zu erzeugen, und bei Empfang des zweiten Signals das Anzeigemittel derart zu steuern, dass anstatt der Ruheanzeige und/oder der Meldungsanzeige die zweite Ereignisanzeige angezeigt wird, und/oder ein einen Alarm charakterisierendes drittes Signal, insbesondere ein Alarmsignal, zu empfangen und/oder zu erzeugen, und bei Empfang des dritten Signals das Anzeigemittel derart zu steuern, dass anstatt der Ruheanzeige und/oder der Meldungsanzeige die dritte Ereignisanzeige angezeigt wird.

Das zweite Ereignis kann beispielsweise eine Störung sein. Wenn das zweite Ereignis angezeigt wird in dem Hauptabschnitt, wird die älteste Meldung und die aktuellste Meldung in dem ersten Randabschnitt angezeigt. Das dritte Ereignis kann ein Alarm sein. Wenn das dritte Ereignis angezeigt wird in dem Hauptabschnitt, kann analog zur ersten oder zweiten Ereignisanzeige die aktuellste und die älteste Meldung angezeigt werden.

Alternativ kann in der zweiten und/oder dritten Ereignisanzeige auch lediglich die aktuellste Meldung als einzige Meldung in dem ersten Randabschnitt angezeigt werden.

Sobald eine Störung vorliegt und die Steuerungseinheit das zweite Signal empfängt oder erzeugt, wird das Anzeigemittel derart gesteuert, dass die zweite Ereignisanzeige angezeigt wird. Analog hierzu wird im Falle eines Alarms das dritte Signal erzeugt oder empfangen und bei Empfang des dritten Signals das Anzeigemittel derart gesteuert, dass die dritte Ereignisanzeige angezeigt wird.

In einer weiteren bevorzugten Ausführungsvariante ist vorgesehen, dass die älteste Meldung und/oder die aktuellste Meldung und/oder die weiteren Meldungen eine balkenförmige Darstellung aufweisen, wobei sich die balkenförmige Darstellung vorzugsweise von einem linken Rand des Anzeigemittels bis zu einem rechten Rand des Anzeigemittels erstreckt.

Darüber hinaus kann es bevorzugt sein, dass das Anzeigemittel einen Anzeigebereich aufweist und der Hauptabschnitt mehr als 60%, mehr als 70%, mehr als 80 % oder mehr als 90 % der Größe des Anzeigebereichs einnimmt.

Des Weiteren ist der erste Randabschnitt in einem unteren Abschnitt des Anzeigebereichs angeordneteetrrund grenzt vorzugsweise an eine untere Kante des Anzeigebereichs an und nimmt weniger als 30 %, vorzugsweise weniger als 20 % oder weniger als 10 % einer Höhe des Anzeigebereichs ein. Ferner ist es bevorzugt, dass der zweite Randabschnitt in einem linken Abschnitt des Anzeigebereichs angeordnet ist und vorzugsweise an eine linke Kante des Anzeigebereichs angrenzt und vorzugsweise weniger als 30 %, weniger als 20 %, weniger als 10 % oder weniger als 5 % einer Breite des Anzeigebereichs einnimmt.

Darüber hinaus ist die Steuerungseinheit eingerichtet, auf dem Anzeigemittel nach einer vordefinierten Inaktivitätszeit die Ruheanzeige anzuzeigen. Die Inaktivitätszeit kann beispielsweise 1 Stunde bei einer Feuermeldung betragen.

Gemäß einem weiteren Aspekt wird die eingangs genannte Aufgabe gelöst durch eine Gefahrenmelderzentrale, beispielsweise eine Einbruch-, Brandmelder- und/oder Löschsteuerzentrale, umfassend eine Steuerungseinheit nach einer der im Vorherigen beschriebenen Ausführungsvarianten.

Gemäß einem weiteren Aspekt wird die eingangs genannte Aufgabe gelöst durch ein Gefahrenmeldersystem, vorzugsweise ein Brandmeldersystem, mit einer Gefahrenmelderzentrale, beispielsweise einer Einbruch-, Brandmelder- und/oder Löschsteuerzentrale, das Gefahrenmeldersystem umfassend einen Gefahrenmelder zur Erkennung einer Gefahrensituation, beispielsweise eines Feuers, eine mit dem Gefahrenmelder signaltechnisch gekoppelte Steuerungseinheit gemäß Anspruch 1, die eingerichtet ist, von dem Gefahrenmelder ein die Gefahrensituation charakterisierendes erstes Signal zu empfangen.

Gemäß einem weiteren Aspekt wird die eingangs genannte Aufgabe gelöst durch ein Verfahren zum Betrieb einer Gefahrenmelderzentrale, beispielsweise eine Einbruch-, Brandmelder- und/oder Löschsteuerzentrale, umfassend die Schritte gemäß Anspruch 13.

Das Verfahren und seine möglichen Fortbildungen weisen Merkmale bzw. Verfahrensschritte auf, die sie insbesondere dafür geeignet machen, für eine Steuerungseinheit, eine Gefahrenmelderzentrale und ein Gefahrenmeldersystem sowie ihre jeweiligen Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen der Steuerungseinheit verwiesen.

Bevorzugte Ausführungsbeispiele werden exemplarisch anhand der beiliegenden Figuren erläutert. Es zeigen:
- Figur 1:: eine schematische Darstellung eines Gefahrenmeldersystems;
- Figur 2:: das Gefahrenmeldersystem aus Figur 1 mit einer ersten Ereignisanzeige;
- Figur 3:: das Gefahrenmeldersystem aus Figur 1 mit einer zweiten Ereignisanzeige;
- Figur 4:: das Gefahrenmeldersystem aus Figur 1 mit einer dritten Ereignisanzeige;
- Figur 5:: das Gefahrenmeldersystem aus Figur 1 mit einer Meldungsdarstellung; und
- Figur 6:: ein schematisches Verfahren zum Betrieb einer Gefahrenmelderzentrale.

In den Figuren sind gleiche oder im Wesentlichen funktionsgleiche bzw. -ähnliche Elemente mit den gleichen Bezugszeichen bezeichnet.

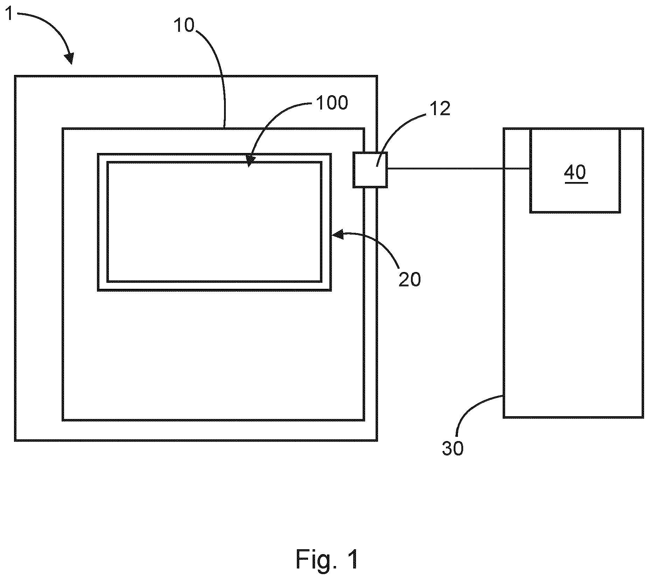

Figur 1 zeigt eine schematische Darstellung eines Gefahrenmeldersystems. Das Gefahrenmeldersystem umfasst eine Gefahrenmelderzentrale 1 mit einer Steuerungseinheit 10 und einen Gefahrenmelder 40. Der Gefahrenmelder 40 kann beispielsweise ein Brandgas- oder Rauchgasmelder, Wärmemelder, Rauchmelder, Flammenmelder oder Funkenmelder sein. Der Gefahrenmelder 40 ist in einem Überwachungsbereich 30 angeordnet. Vorzugsweise ist der Überwachungsbereich 30 örtlich getrennt von dem Ort, an dem die Steuerungseinheit 10 angeordnet ist.

Die Steuerungseinheit 10 ist Teil der Gefahrenmelderzentrale 1, welche vorzugsweise als Einbruch-, Brandmelder- und/oder Löschsteuerzentrale ausgebildet ist. Die Steuerungseinheit 10 umfasst ein Anzeigemittel 20. Das Anzeigemittel 20 ist zur Anzeige von Informationen ausgebildet. Das Anzeigemittel 20 kann beispielsweise als ein berührungsempfindlicher Eingabe- und Ausgabebildschirm ausgebildet sein.

Das Anzeigemittel 20 kann unterschiedlichste Informationen darstellen, beispielsweise die in Figur 1 gezeigte Ruheanzeige 100. Die Ruheanzeige 100 kann beispielsweise ein Bildschirmschoner sein. Insbesondere wird die Ruheanzeige 100 von dem Anzeigemittel 20 angezeigt, wenn eine vorbestimmte Zeitdauer keine Interaktion mit einem Bediener der Gefahrenmelderzentrale 1 und/oder der Steuerungseinheit 10 erfolgte.

Der Gefahrenmelder 40 ist zur Erkennung einer Gefahrensituation ausgebildet. Die Steuerungseinheit ist eingerichtet, um von dem Gefahrenmelder 40 ein die Gefahrensituation charakterisierendes erstes Signal zu empfangen. Hierzu weist das Gefahrenmeldersystem eine Kopplungsschnittstelle 12 auf. Die Kopplungsschnittstelle 12 koppelt den Gefahrenmelder 40 mit der Steuerungseinheit 10.

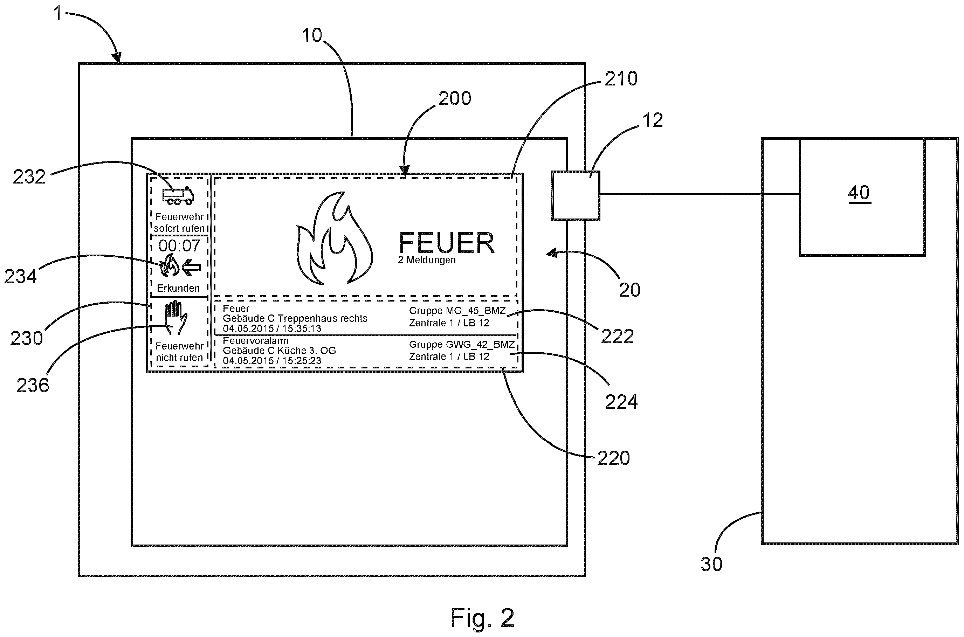

Figur 2 zeigt das Gefahrenmeldersystem aus Figur 1 mit einer ersten Ereignisanzeige 200. In dem hier gezeigten Zustand wurde von dem Gefahrenmelder 40 eine Gefahrensituation erkannt und ein diese Gefahrensituation charakterisierendes erstes Signal von der Steuerungseinheit 10 empfangen. Die Steuerungseinheit 10 ist eingerichtet, bei Empfang dieses ersten Signals das Anzeigemittel 20 derart zu steuern, dass anstatt der Ruheanzeige 100 die erste Ereignisanzeige 200 angezeigt wird. Das Gleiche gilt, wenn die im Folgenden noch näher erläuterte Meldungsanzeige auf dem Anzeigemittel 20 angezeigt wird. Die erste Ereignisanzeige 200 zeigt ein erstes Ereignis in einem Hauptabschnitt 210 an. Ferner zeigt die erste Ereignisanzeige eine älteste Meldung 222 und eine aktuellste Meldung 224 in einem ersten Randabschnitt 220 an.

Der Hauptabschnitt 210 ist vorzugsweise der größte auf dem Anzeigemittel 20 angezeigte Bereich. Der erste Randabschnitt 220 ist in einem Bereich angeordnet, der an eine untere Kante und an eine rechte Kante des Anzeigemittels 20 angrenzt.

Darüber hinaus umfasst die erste Ereignisanzeige 200 einen zweiten Randabschnitt 230. Der zweite Randabschnitt 230 ist angrenzend an eine linke Kante des Anzeigemittels 20 angeordnet. Der zweite Randabschnitt 230 umfasst ein erstes Aktionsmittel 232, ein zweites Aktionsmittel 234 und ein drittes Aktionsmittel 236. Bei Betätigung des ersten Aktionsmittels 232 wird ein Alarmsignal erzeugt und gesendet, wobei das Alarmsignal zur Alarmierung einer Feuerwehr ausgebildet sein kann. Bei Betätigung des zweiten Aktionsmittels 234 durch einen Bediener wird eine vorbestimmte Wartezeit um eine vorbestimmte Erkundungszeit verlängert. Die Wartezeit ist beispielsweise die Zeit, die zwischen Eingang des ersten Signals zur Steuerungseinheit 10 und dem Absetzen eines Alarmsignals, beispielsweise an eine Feuerwehr, verstreicht. Diese Zeit kann beispielsweise 30 Sekunden betragen. Die vorbestimmte Erkundungszeit verlängert dann diese Wartezeit, damit beispielsweise ein Bediener die erkannte Gefahrensituation verifizieren kann.

Das dritte Aktionsmittel 236 hemmt vorzugsweise das Erzeugen und/oder Senden eines Alarmsignals. Das dritte Aktionsmittel kann beispielsweise von einem Bediener im Falle eines Fehlalarms verwendet werden, um die Alarmierung einer Feuerwehr zu verhindern.

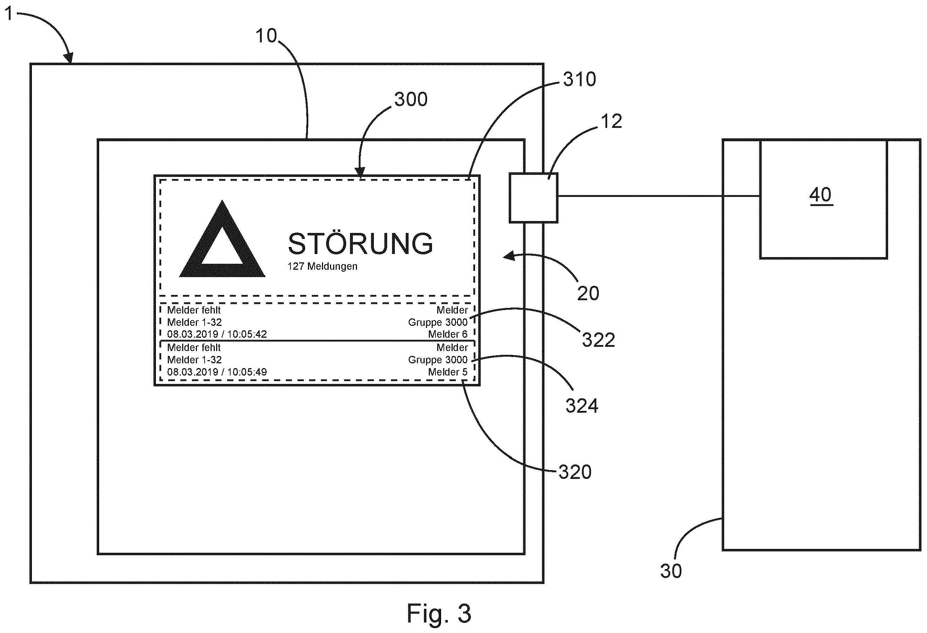

Figur 3 zeigt das Gefahrenmeldersystem aus Figur 1 mit einer zweiten Ereignisanzeige 300. Das gezeigte Gefahrenmeldersystem umfasst die Gefahrenmelderzentrale 1 mit einer Steuerungseinheit 10 und einer Kopplungsschnittstelle 12, wobei die Kopplungsschnittstelle 12 die Steuerungseinheit 10 mit dem Gefahrenmelder 40 koppelt, wobei der Gefahrenmelder 40 den Überwachungsbereich 30 überwachen und Gefahrensituationen erkennen kann.

Auf dem Anzeigemittel 20 der Steuerungseinheit 10 ist eine zweite Ereignisanzeige 300 gezeigt. Die zweite Ereignisanzeige 300 umfasst ebenfalls einen Hauptabschnitt 310 und einen ersten Randabschnitt 320, jedoch keinen im Vorherigen beschriebenen zweiten Randabschnitt. Das Anzeigemittel 20 zeigt hier eine zweite Ereignisanzeige 300, die ein zweites Ereignis im Hauptabschnitt 310 und eine aktuellste Meldung 324 und eine älteste Meldung 322 in dem ersten Randabschnitt 320 anzeigt. Bei dem zweiten Ereignis handelt es sich vorliegend um eine Störung.

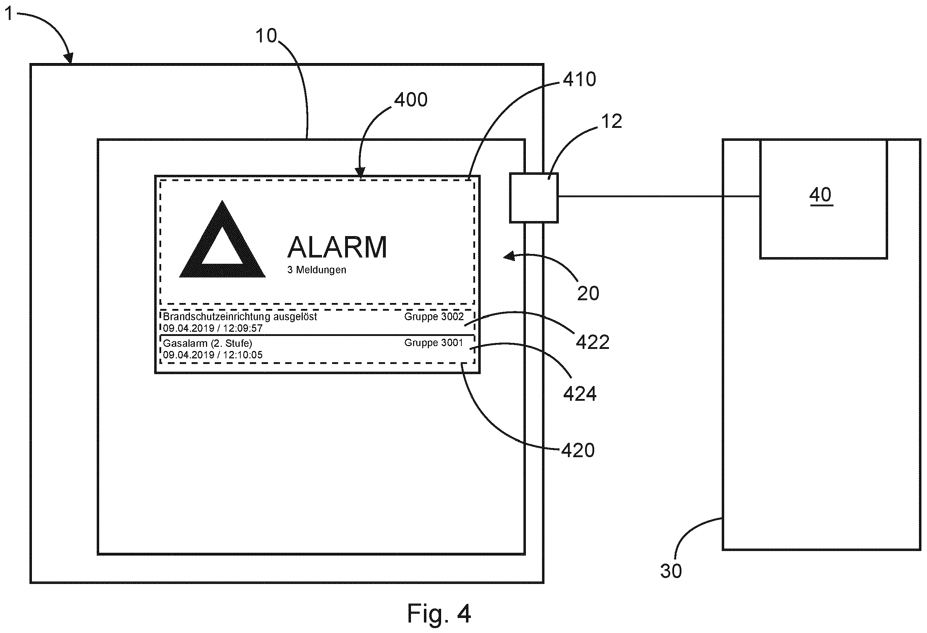

Figur 4 zeigt das Gefahrenmeldersystem aus Figur 1 mit einer dritten Ereignisanzeige 400. Das Anzeigemittel 20 ist hier eingerichtet zur Darstellung der dritten Ereignisanzeige 400, die ein drittes Ereignis, vorliegend einen Alarm, in dem Hauptabschnitt 410 anzeigt. Eine aktuellste Meldung 424 und eine älteste Meldung 422 werden in dem ersten Randabschnitt 420.

Alternativ können auch lediglich die aktuellsten Meldungen 224, 324 bzw. 424 in dem jeweiligen ersten Randabschnitt 220, 320, 420 der ersten Ereignisanzeige 200, der zweiten Ereignisanzeige 300 und/oder der dritten Ereignisanzeige 400 angezeigt werden.

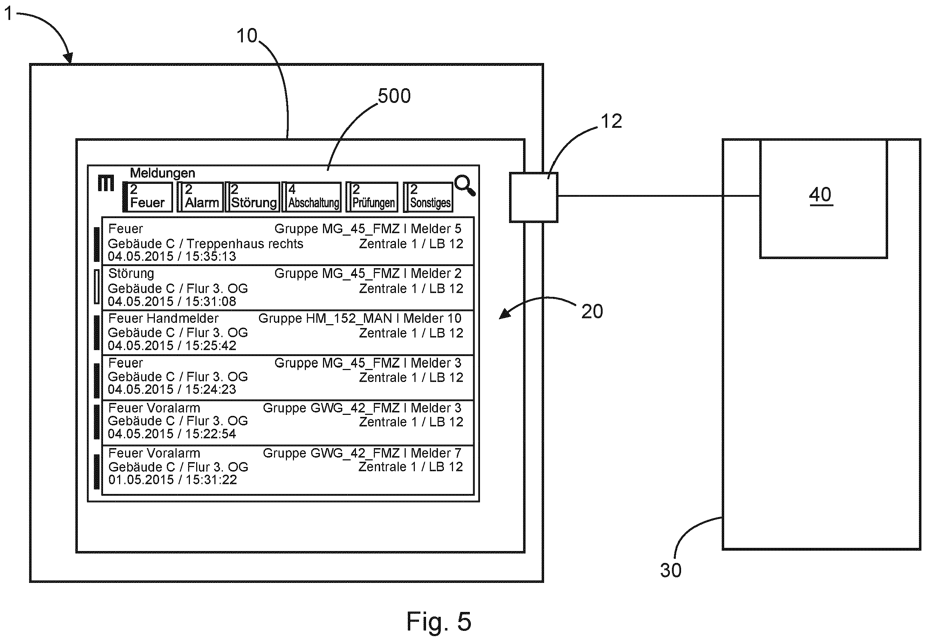

Figur 5 zeigt das Gefahrenmeldersystem aus Figur 1 mit einer Meldungsdarstellung 500.

Das Anzeigemittel 20 der Steuerungseinheit 10 zeigt hier die Meldungsanzeige 500 an. Die Meldungsanzeige 500 zeigt bildschirmfüllend eine Mehrzahl an Meldungen an. Die Meldungsanzeige 500 kann von einem Bediener aufgerufen werden, wenn dieser auf den Hauptabschnitt 210, 310, 410 der Ereignisanzeigen 200, 300, 400 tippt.

Weiters kann die Meldungsanzeige 500 von einem Bediener aufgerufen werden, wenn dieser bei Anzeigen der Ruheanzeige 100 auf den Bildschirm bzw. auf das Anzeigemittel 20 tippt. Die Meldungsanzeige 500 zeigt eine Anzahl an Meldungen an.

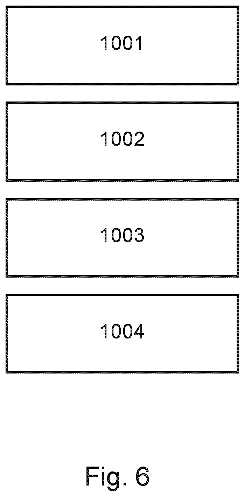

Figur 6 zeigt ein schematisches Verfahren zum Betrieb einer Gefahrenmelderzentrale. In Schritt 1001 wird die Ruheanzeige 100 und/oder Meldungsanzeige 500 mittels des Anzeigemittels 20 angezeigt, wobei eine älteste Meldung 222 und eine aktuellste Meldung 224 angezeigt werden und weitere Meldungen zwischen der ältesten Meldung 222 und der aktuellsten Meldung 224 anzeigbar sind. Gemäß der Erfindung ist vorgesehen, dass die Meldungen, die zwischen der ältesten Meldung 222 und der aktuellsten Meldung 224 angeordnet sind, scrollbar angeordnet sind. Das bedeutet, dass mittels eines geeigneten Scrollmittels an der Steuerungseinheit 10 eine Anzeige einer Vielzahl von Meldungen ermöglicht wird. Alternativ kann in Schritt 1001 eine Ruheanzeige 100 angezeigt werden.

In Schritt 1002 erfolgt eine Erkennung einer Gefahrensituation, wobei diese Gefahrensituation vorzugsweise durch einen Gefahrenmelder 40 erkannt wird. Darüber hinaus wird in Schritt 1002 ein diese Gefahrensituation charakterisierendes erstes Signal erzeugt. Dieses erste Signal wird vorzugsweise von dem Gefahrenmelder 40 erzeugt.

In Schritt 1003 wird dieses erste Signal empfangen. Es ist bevorzugt, dass das erste Signal von der Steuerungseinheit 10 empfangen wird. Zwischen der Steuerungseinheit 10 und dem Gefahrenmelder 40 kann darüber hinaus eine Kopplungsschnittstelle 12 angeordnet sein.

In Schritt 1004 wird ein erstes Ereignis in dem ersten Hauptabschnitt 210 des Anzeigemittels 20 angezeigt, und die älteste Meldung 222 und die aktuellste Meldung 224 werden in einem ersten Randabschnitt 220 angezeigt.

Die vorliegende Erfindung ermöglicht die Reduktion der Reaktionszeit bei Ereignissen. Die Anzeige der ersten Ereignisanzeige 200 in dem Hauptabschnitt 210 und das Verschieben der Meldungen 222, 224 in den ersten Randabschnitt 220 ermöglicht die sofortige Erkennung der Art des Ereignisses durch einen Bediener. Der Bediener kann somit deutlich schneller die erforderlichen Schritte einleiten und somit Personen- und/oder Sachschaden vermeiden oder zumindest verringern.

### BEZUGSZEICHEN

- 1: Gefahrenmelderzentrale
- 10: Steuerungseinheit
- 12: Kopplungsschnittstelle
- 20: Anzeigemittel
- 30: Überwachungsbereich
- 40: Gefahrenmelder
- 100: Ruheanzeige
- 200: erste Ereignisanzeige
- 210: Hauptabschnitt
- 220: erster Randabschnitt
- 222: älteste Meldung
- 224: aktuellste Meldung
- 230: zweiter Randabschnitt
- 232: erstes Aktionsmittel
- 234: zweites Aktionsmittel
- 236: drittes Aktionsmittel
- 300: zweite Ereignisanzeige
- 310: Hauptabschnitt
- 320: erster Randabschnitt
- 322: älteste Meldung
- 324: aktuellste Meldung
- 400: dritte Ereignisanzeige
- 410: Hauptabschnitt
- 420: erster Randabschnitt
- 422: aktuellste Meldung
- 500: Meldungsanzeige

## Patentansprüche

1. Steuerungseinheit (10) für eine Gefahrenmelderzentrale (1), beispielsweise eine Einbruch-, Brandmelder- und/oder Löschsteuerzentrale, wobei die Steuerungseinheit (10)
- eingerichtet ist, von einem Gefahrenmelder (40) zur Erkennung einer Gefahrensituation ein die Gefahrensituation charakterisierendes erstes Signal zu empfangen,
- eine als berührungsempfindlicher Eingabe- und Ausgabebildschirm ausgebildete Benutzerschnittstelle mit einem Anzeigemittel (20) umfasst, das eingerichtet ist, zur Darstellung
∘ einer Ruheanzeige (100) und/oder einer Meldungsanzeige (500), wobei die Ruheanzeige (100) von dem Anzeigemittel (20) angezeigt wird, wenn eine vorbestimmte Zeitdauer keine Interaktion mit einem Bediener der Gefahrenmelderzentrale (1) und der Steuerungseinheit (10) erfolgte, wobei die Meldungsanzeige (500) von dem Bediener aufgerufen wird, wenn dieser bei Anzeigen der Ruheanzeige (100) auf das Anzeigemittel (20) tippt und wobei in der Meldungsanzeige (500) eine Anzahl an Meldungen auf dem Anzeigemittel (20) angezeigt werden, nämlich eine älteste Meldung (222) und eine aktuellste Meldung (224), wobei weitere Meldungen, die zeitlich zwischen der ältesten Meldung (222) und der aktuellsten Meldung (224) liegen, auf dem Anzeigemittel (20) räumlich zwischen der ältesten Meldung (222) und der aktuellsten Meldung (224) scrollbar anzeigbar sind, und
∘ einer ersten Ereignisanzeige (200), die einen Hauptabschnitt (210) und einen von dem Hauptabschnitt (210) verschiedenen, in einem unteren Abschnitt des Anzeigebereichs angeordneten ersten Randabschnitt (220) aufweist, wobei der Hauptabschnitt (210) größer als der erste Randabschnitt (230) ist und der erste Randabschnitt (220) weniger als 30 % einer Höhe des Anzeigebereichs einnimmt, wobei die erste Ereignisanzeige (200) ein die Gefahrensituation kennzeichnendes erstes Ereignis in dem Hauptabschnitt (210) anzeigt und die älteste Meldung (222) und die aktuellste Meldung (224) in dem ersten Randabschnitt (220) des Anzeigemittels (20) anzeigt, wobei die Meldungsanzeige (500) von dem Bediener ferner aufgerufen wird, wenn dieser bei Anzeigen der ersten Ereignisanzeige (200) auf den Hauptabschnitt (210) tippt, und die Steuerungseinheit -eingerichtet ist, bei Empfang des ersten Signals das Anzeigemittel (20) derart zu steuern, dass anstatt der Ruheanzeige (100) und/oder der Meldungsanzeige (500) die erste Ereignisanzeige (200) angezeigt wird.

2. Steuerungseinheit (10) nach Anspruch 1, umfassend ein Meldungsbetätigungsmittel, wobei bei Betätigung des Meldungsbetätigungsmittels das Anzeigemittel (20) derart von der Steuereinheit gesteuert wird, dass anstatt der ersten Ereignisanzeige (200) die Meldungsanzeige (500) angezeigt wird,
wobei vorzugsweise das Meldungsbetätigungsmittel auf dem Eingabe- und Ausgabebildschirm, vorzugsweise im Hauptabschnitt (210), angeordnet ist.

3. Steuerungseinheit (10) nach einem der vorherigen Ansprüche, umfassend
- ein erstes Aktionsmittel (232), wobei die Steuerungseinheit (10) eingerichtet ist, bei Betätigung des ersten Aktionsmittels (232) ein Alarmsignal, insbesondere zur Alarmierung einer Feuerwehr, zu erzeugen und vorzugsweise zu senden, und/oder
- ein zweites Aktionsmittel (234), wobei die Steuerungseinheit (10) eingerichtet ist, bei Betätigung des zweiten Aktionsmittels (234), eine vorbestimmte Wartezeit um eine vorbestimmte Erkundungszeit zu verlängern, und/oder
- ein drittes Aktionsmittel (236), wobei die Steuerungseinheit (10) eingerichtet ist, bei Betätigung des dritten Aktionsmittels (236), ein Erzeugen und/oder Senden eines Alarmsignals zu hemmen.

4. Steuerungseinheit (10) nach dem vorherigen Anspruch, wobei das erste Aktionsmittel (232), das zweite Aktionsmittel (234) und/oder das dritte Aktionsmittel (236) auf dem Eingabe- und Ausgabebildschirm angeordnet ist, vorzugsweise in einem zweiten Randabschnitt (230).

5. Steuerungseinheit (10) nach einem der vorherigen Ansprüche, wobei die Steuerungseinheit (10) eingerichtet ist, ein Entwarnungssignal zu empfangen und bei Empfang des Entwarnungssignals das Anzeigemittel (20) derart zu steuern, dass anstatt der ersten Ereignisanzeige (200) die Ruheanzeige (100) und/oder die Meldungsanzeige (500) angezeigt wird.

6. Steuerungseinheit (10) nach einem der vorherigen Ansprüche, wobei
- das Anzeigemittel (20) eingerichtet ist, zur Darstellung einer zweiten Ereignisanzeige (300), die ein zweites Ereignis in dem Hauptabschnitt anzeigt, und/oder zur Darstellung einer dritten Ereignisanzeige (400), die ein drittes Ereignis in dem Hauptabschnitt anzeigt, wobei die älteste Meldung (322) und die aktuellste Meldung (324) in dem ersten Randabschnitt (220) angezeigt werden, und
- die Steuerungseinheit (10) eingerichtet ist,
∘ ein eine Störung charakterisierendes zweites Signal, insbesondere ein Störungssignal, zu empfangen und/oder zu erzeugen, und
∘ bei Empfang des zweiten Signals das Anzeigemittel (20) derart zu steuern, dass anstatt der Ruheanzeige (100) und/oder der Meldungsanzeige (500) die zweite Ereignisanzeige (300) angezeigt wird, und/oder
∘ ein einen Alarm charakterisierendes drittes Signal, insbesondere ein Alarmsignal, zu empfangen und/oder zu erzeugen, und
∘ bei Empfang des dritten Signals das Anzeigemittel (20) derart zu steuern, dass anstatt der Ruheanzeige (100) und/oder der Meldungsanzeige (500) die dritte Ereignisanzeige (400) angezeigt wird.

7. Steuerungseinheit (10) nach einem der vorherigen Ansprüche, wobei die älteste Meldung (222) und/oder die aktuellste Meldung (224) und/oder die weiteren Meldungen eine balkenförmige Darstellung aufweisen, wobei sich die balkenförmige Darstellung vorzugsweise von einem linken Rand des Anzeigemittels (20) bis zu einem rechten Rand des Anzeigemittels (20) erstreckt.

8. Steuerungseinheit (10) nach einem der vorherigen Ansprüche, wobei das Anzeigemittel (20) einen Anzeigebereich aufweist und der Hauptabschnitt (210) mehr als 60%, mehr als 70%, mehr als 80 % oder mehr als 90 % der Größe des Anzeigebereichs einnimmt.

9. Steuerungseinheit (10) nach einem der vorherigen Ansprüche, wobei
- der erste Randabschnitt (220) an eine untere Kante des Anzeigebereichs angrenzt, und/oder
- der zweite Randabschnitt in einem linken Abschnitt des Anzeigebereichs angeordnet ist und vorzugsweise an eine linke Kante des Anzeigebereichs angrenzt und vorzugsweise weniger als 30 %, weniger als 20 %, weniger als 10 % oder weniger als 5 % einer Breite des Anzeigebereichs einnimmt.

10. Steuerungseinheit (10) nach einem der vorherigen Ansprüche, wobei die Steuerungseinheit (10) eingerichtet ist, auf dem Anzeigemittel (20) nach einer vordefinierten Inaktivitätszeit die Ruheanzeige (100) anzuzeigen.

11. Gefahrenmelderzentrale (1), beispielsweise eine Einbruch-, Brandmelder- und/oder Löschsteuerzentrale, umfassend eine Steuerungseinheit (10) nach einem der Ansprüche 1-10.

12. Gefahrenmeldersystem, vorzugsweise ein Brandmeldersystem, mit einer Gefahrenmelderzentrale (1), beispielsweise einer Einbruch-, Brandmelder- und/oder Löschsteuerzentrale, das Gefahrenmeldersystem umfassend
- einen Gefahrenmelder (40) zur Erkennung einer Gefahrensituation, beispielsweise eines Feuers,
- eine mit dem Gefahrenmelder (40) signaltechnisch gekoppelte Steuerungseinheit nach Anspruch 1, die eingerichtet ist, von dem Gefahrenmelder (40) ein die Gefahrensituation charakterisierendes erstes Signal zu empfangen.

13. Verfahren zum Betrieb einer Gefahrenmelderzentrale (1), beispielsweise eine Einbruch-, Brandmelder- und/oder Löschsteuerzentrale, umfassend die Schritte:
- Anzeigen (1001) einer Ruheanzeige (100) und/oder einer Meldungsanzeige (500) mittels eines als berührungsempfindlicher Eingabe- und Ausgabebildschirm ausgebildeten Anzeigemittels (20), wobei die Ruheanzeige (100) angezeigt wird, wenn eine vorbestimmte Zeitdauer keine Interaktion mit einem Bediener der Gefahrenmelderzentrale (1) und der Steuerungseinheit (10) erfolgte, wobei die Meldungsanzeige (500) von dem Bediener aufgerufen wird, wenn dieser bei Anzeigen der Ruheanzeige (100) auf das Anzeigemittel (20) tippt und wobei in der Meldungsanzeige (500) eine Anzahl an Meldungen auf dem Anzeigemittel (20) angezeigt werden, nämlich eine älteste Meldung (222) und eine aktuellste Meldung (224), wobei weitere Meldungen, die zeitlich zwischen der ältesten Meldung (222) und der aktuellsten Meldung (224) liegen, räumlich zwischen der ältesten Meldung (222) und der aktuellsten Meldung (224) scrollbar anzeigbar sind;
- Erkennung (1002) einer Gefahrensituation und Erzeugen eines die Gefahrensituation charakterisierendes ersten Signals; und
- Empfangen (1003) des ersten Signals;
- Anzeigen (1004), anstatt der Ruheanzeige (100) und/oder der Meldungsanzeige (500), einer ersten Ereignisanzeige, die einen Hauptabschnitt (210) und einen von dem Hauptabschnitt (210) verschiedenen, in einem unteren Abschnitt des Anzeigebereichs angeordneten ersten Randabschnitt (220) aufweist, wobei der Hauptabschnitt (210) größer als der erste Randabschnitt (220) ist und der erste Randabschnitt (220) weniger als 30 % einer Höhe des Anzeigebereichs einnimmt, wobei die erste Ereignisanzeige (200) ein die Gefahrensituation kennzeichnendes erstes Ereignis in dem Hauptabschnitt (210) des Anzeigemittels (20), und die älteste Meldung (222) und die aktuellste Meldung (224) in dem ersten Randabschnitt (220) des Anzeigemittels (20) anzeigt, wobei die Meldungsanzeige (500) von dem Bediener ferner aufgerufen wird, wenn dieser bei Anzeigen der ersten Ereignisanzeige (200) auf den Hauptabschnitt (210) tippt.

## Claims

1. A control unit (10) for a hazard alert center (1), for example a break-in, fire detector and/or extinguishing control center, wherein the control unit (10)
- is configured to receive, from a hazard detector (40) for detecting a hazardous situation, a first signal characterizing the hazardous situation,
- comprises a user interface in the form of a touch-sensitive input and output screen having a display means (20) which is configured to present
∘ a standard display (100) and/or a message display (500), wherein the standard display (100) is displayed by the display means (20) if there has been no interaction with an operator of the hazard alert center (1) and the control unit (10) for a predetermined period, wherein the message display (500) is called up by an operator, if the operator taps on the display means (20) displaying the standard display (100) and wherein in the message display (500) a number of messages are displayed on the display means (20), namely an oldest message (222) and a latest message (224), wherein further messages that lie in time between the oldest message (222) and the latest message (224) can be displayed in a scrollable manner on the display means (20) spatially between the oldest message (222) and the latest message (224), and
∘ a first event display (200) that comprises a main section (210) and first edge section (220) that differs from the main section (210) and is arranged in a lower section of the display region, wherein the main section (210) is larger than the first edge section (220) and the first edge section (220) occupies less than 30 % of a height of the display region, wherein the first event display (200) displays a first event characterizing a hazardous situation in the main section (210) and displays the oldest message (222) and the latest message (224) in the first edge section (220) of the display means (20), wherein the message display (500) is called up by an operator, if the operator taps on the main section (210) when the first event display (200) is displayed,
and the control unit
- is configured, upon receiving the first signal, to control the display means (20) in such a manner that the first event display (200) is displayed instead of the standard display (100) and/or the message display (500).

2. The control unit (10) as claimed in claim 1, comprising a message actuation means, wherein, when the message actuation means is actuated, the display means (20) is controlled by the control unit in such a manner that the message display (500) is displayed instead of the first event display (200),
wherein the message actuation means is preferably arranged on the input and output screen, preferably in the main section (210).

3. The control unit (10) as claimed in one of the preceding claims, comprising
- a first action means (232), wherein the control unit (10) is configured to generate and preferably transmit an alarm signal, in particular for alerting a fire department, when the first action means (232) is actuated, and/or
- a second action means (234), wherein the control unit (10) is configured to extend a predetermined waiting time by a predetermined investigation time when the second action means (234) is actuated, and/or
- a third action means (236), wherein the control unit (10) is configured to prevent an alarm signal from being generated and/or transmitted when the third action means (236) is actuated.

4. The control unit (10) as claimed in the preceding claim, wherein the first action means (232), the second action means (234) and/or the third action means (236) is/are arranged on the input and output screen, preferably in a second edge section (230).

5. The control unit (10) as claimed in one of the preceding claims, wherein the control unit (10) is configured to receive an all-clear signal and, upon receiving the all-clear signal, to control the display means (20) in such a manner that the standard display (100) and/or the message display (500) is/are displayed instead of the first event display (200).

6. The control unit (10) as claimed in one of the preceding claims, wherein
- the display means (20) is configured to present a second event display (300), which displays a second event in the main section, and/or to present a third event display (400), which displays a third event in the main section, wherein the oldest message (322) and the latest message (324) are displayed in the first edge section (220), and
- the control unit (10) is configured
∘ to receive and/or generate a second signal characterizing a fault, in particular a fault signal, and
∘ upon receiving the second signal, to control the display means (20) in such a manner that the second event display (300) is displayed instead of the standard display (100) and/or the message display (500), and/or
o to receive and/or generate a third signal characterizing an alarm, in particular an alarm signal, and
o upon receiving the third signal, to control the display means (20) in such a manner that the third event display (400) is displayed instead of the standard display (100) and/or the message display (500).

7. The control unit (10) as claimed in one of the preceding claims, wherein the oldest message (222) and/or the latest message (224) and/or the further messages have a bar-shaped presentation, wherein the bar-shaped presentation preferably extends from a left-hand edge of the display means (20) to a right-hand edge of the display means (20).

8. The control unit (10) as claimed in one of the preceding claims, wherein the display means (20) has a display region and the main section (210) occupies more than 60%, more than 70%, more than 80% or more than 90% of the size of the display region.

9. The control unit (10) as claimed in one of the preceding claims, wherein
- the first edge section (220) adjoins a lower edge of the display region, and/or
- the second edge section is arranged in a left-hand section of the display region and preferably adjoins a left-hand edge of the display region and preferably occupies less than 30%, less than 20%, less than 10% or less than 5% of a width of the display region.

10. The control unit (10) as claimed in one of the preceding claims, wherein the control unit (10) is configured to display the standard display (100) on the display means (20) after a predefined inactivity time.

11. A hazard alert center (1), for example a break-in, fire detector and/or extinguishing control center, comprising a control unit (10) as claimed in one of claims 1-10.

12. A hazard alert system, preferably a fire detector system, having a hazard alert center (1), for example a break-in, fire detector and/or extinguishing control center, the hazard alert system comprising
- a hazard detector (40) for detecting a hazardous situation, for example a fire,
- a control unit (10) according to claim 1 which is coupled to the hazard detector (40) using signaling and is configured to receive a first signal characterizing the hazardous situation from the hazard detector (40).

13. A method for operating a hazard alert center (1), for example a break-in, fire detector and/or extinguishing control center, comprising the steps of:
- displaying (1001) a standard display (100) and/or a message display (500) by means of a display means (20) in the form of a touch-sensitive input and output screen, wherein the standard display (100) is displayed by the display means (20) if there has been no interaction with an operator of the hazard alert center (1) and the control unit (10) for a predetermined period, wherein the message display (500) is called up by an operator, if the operator taps on the display means (20) displaying the standard display (100) and wherein a number of messages are displayed in the message display (500) on the display means (20), namely an oldest message (222) and a latest message (224) wherein further messages that lie in time between the oldest message (222) and the latest message (224) can be displayed in a scrollable manner on the display means (20) spatially between the oldest message (222) and the latest message (224);
- detecting (1002) a hazardous situation and generating a first signal characterizing the hazardous situation; and
- receiving (1003) the first signal;
- displaying (1004) instead of the standard display (100) and/orthe message display (500) of a first event display that comprises a main section (210) and first edge section (220) that differs from the main section (210) and is arranged in a lower section of the display region, wherein the main section (210) is larger than the first edge section (220) and the first edge section (220) occupies less than 30 % of a height of the display region, wherein the first event display (200) displays a first event characterizing the hazardous situation in the main section (210) of the display means (20) and displays the oldest message (222) and the latest message (224) in a first edge section (220) of the display means (20), wherein the message display (500) is called up by an operator, if the operator taps on the main section (210) when the first event display (200) is displayed.

## Revendications

1. Unité de commande (10) pour une centrale de signalisation de danger (1), par exemple une centrale de signalisation d'intrusion, d'alarme d'incendie et/ou de commande d'extinction d'incendie, dans laquelle l'unité de commande (10)
- est mise au point pour recevoir un premier signal caractérisant la situation dangereuse par un avertisseur de danger (40) pour identifier une situation dangereuse,
- comprend une interface utilisateur, réalisée en tant qu'écran tactile de saisie et de sortie, avec un moyen d'affichage (20), qui est mis au point pour représenter
-- un affichage de repos (100) et/ou un affichage de message (500), dans lequel l'affichage de repos (100) est affiché par le moyen d'affichage (20) lorsque, pendant une durée prédéfinie, aucune interaction avec un utilisateur de la centrale d'avertissement de danger (1) et de l'unité de commande (10) n'a eu lieu, dans lequel l'affichage de message (500) est consulté par l'utilisateur lorsque celui-ci appuie sur le moyen d'affichage (20) lors de l'affichage de l'affichage de repos (100) et dans lequel un nombre de messages sont affichés sur le moyen d'affichage (20) dans l'affichage de message (500), à savoir un message le plus ancien (222) et un message le plus récent (224), dans lequel d'autres messages, qui se situent dans le temps entre le message le plus ancien (222) et le message le plus récent (224), peuvent être affichés de manière déroulante sur le moyen d'affichage (20) spatialement entre le message le plus ancien (222) et le message le plus récent (224), et
-- un premier affichage d'événement (200), qui présente une section principale (210) et une première section de bord (220) différente de la section principale (210), disposée dans une section inférieure de la zone d'affichage, dans lequel la section principale (210) est plus grande que la première section de bord (230) et la première section de bord (220) occupe moins de 30 % d'une hauteur de la zone d'affichage, dans lequel le premier affichage d'événement (200) affiche un premier événement caractérisant la situation dangereuse dans la section principale (210) et affiche le message le plus ancien (222) et le message le plus récent (224) dans la première section de bord (220) du moyen d'affichage (20), dans lequel l'affichage de message (500) est consulté en outre par l'utilisateur lorsque celui-ci tape sur la section principale (210) lors de l'affichage du premier affichage d'événement (200),
et l'unité de commande est mise au point pour commander le moyen d'affichage (20) lors de la réception du premier signal de telle manière que le premier affichage d'événement (200) est affiché au lieu de l'affichage de repos (100) et/ou de l'affichage de message (500).

2. Unité de commande (10) selon la revendication 1, comprenant un moyen d'actionnement de message, dans laquelle, lors de l'actionnement du moyen d'actionnement de message, le moyen d'affichage (20) est commandé de telle manière par l'unité de commande que l'affichage de message (500) est affiché au lieu du premier affichage d'événement (200),
dans laquelle de préférence le moyen d'actionnement de message est disposé sur l'écran de saisie et de sortie, de préférence dans la section principale (210).

3. Unité de commande (10) selon l'une quelconque des revendications précédentes, comprenant
- un premier moyen d'action (232), dans laquelle l'unité de commande (10) est mise au point pour générer et de préférence envoyer un signal d'alarme, en particulier destiné à avertir les pompiers, lors de l'actionnement du premier moyen d'action (232),
et/ou
- un deuxième moyen d'action (234), dans laquelle l'unité de commande (10) est mise au point pour prolonger un temps d'attente prédéfini d'un temps de recherche prédéfini lors de l'actionnement du deuxième moyen d'action (234), et/ou
- un troisième moyen d'action (236), dans laquelle l'unité de commande (10) est mise au point pour empêcher une génération et/ou un envoi d'un signal d'alarme lors de l'actionnement du troisième moyen d'action (236).

4. Unité de commande (10) selon la revendication précédente, dans laquelle le premier moyen d'action (232), le deuxième moyen d'action (234) et/ou le troisième moyen d'action (236) sont disposés sur l'écran de saisie et de sortie, de préférence dans une deuxième section de bord (230).

5. Unité de commande (10) selon l'une quelconque des revendications précédentes, dans laquelle l'unité de commande (10) est mise au point pour recevoir un signal de fin d'alerte et pour commander, lors de la réception du signal de fin d'alerte, le moyen d'affichage (20) de telle manière que l'affichage de repos (100) et/ou l'affichage de message (500) sont affichés au lieu du premier affichage d'événement (200).

6. Unité de commande (10) selon l'une quelconque des revendications précédentes, dans laquelle
- le moyen d'affichage (20) est mis au point pour représenter un deuxième affichage d'événement (300), qui indique un deuxième événement dans la section principale, et/ou pour représenter un troisième affichage d'événement (400), qui indique un troisième événement dans la section principale, dans laquelle le message le plus ancien (322) et le message le plus récent (324) sont affichés dans la première section de bord (220), et
- l'unité de commande (10) est mise au point
-- pour recevoir et/ou pour générer un deuxième signal caractérisant une anomalie, en particulier un signal d'anomalie, et
-- pour commander, lors de la réception du deuxième signal, le moyen d'affichage (20) de telle manière que le deuxième affichage d'événement (300) est affiché au lieu de l'affichage de repos (100) et/ou de l'affichage de message (500), et/ou
-- pour recevoir et/ou pour générer un troisième signal caractérisant une alarme, en particulier un signal d'alarme, et
-- pour commander le moyen d'affichage (20) lors de la réception du troisième signal de telle manière que le troisième affichage d'événement (400) est affiché au lieu de l'affichage de repos (100) et/ou de l'affichage de message (500).

7. Unité de commande (10) selon l'une quelconque des revendications précédentes, dans laquelle le message le plus ancien (222) et/ou le message le plus récent (224) et/ou les autres messages présentent une représentation en forme de barre, dans laquelle la représentation en forme de barre s'étend de préférence depuis un bord gauche du moyen d'affichage (20) jusqu'à un bord droit du moyen d'affichage (20).

8. Unité de commande (10) selon l'une quelconque des revendications précédentes, dans laquelle le moyen d'affichage (20) présente une zone d'affichage et la section principale (210) occupe plus de 60 %, plus de 70 %, plus de 80 % ou plus de 90 % de la dimension de la zone d'affichage.

9. Unité de commande (10) selon l'une quelconque des revendications précédentes, dans laquelle
- la première section de bord (220) jouxte une arête inférieure de la zone d'affichage, et/ou
- la deuxième section de bord est disposée dans une section gauche de la zone d'affichage et jouxte de préférence une arête gauche de la zone d'affichage et occupe de préférence moins de 30 %, moins de 20 %, moins de 10 % ou moins de 5 % d'une largeur de la zone d'affichage.

10. Unité de commande (10) selon l'une quelconque des revendications précédentes, dans laquelle l'unité de commande (10) est mise au point pour afficher l'affichage de repos (100) après un temps d'inactivité prédéfini sur le moyen d'affichage (20).

11. Centrale de signalisation de danger (1), par exemple centrale de signalisation d'intrusion, d'alarme d'incendie et/ou de commande d'extinction d'incendie, comprenant une unité de commande (10) selon l'une quelconque des revendications 1 - 10.

12. Centrale de signalisation de danger (1), par exemple centrale de signalisation d'intrusion, d'alarme d'incendie et/ou de commande d'extinction d'incendie, le système de signalisation de danger comprenant :
- un avertisseur de danger (40) destiné à identifier une situation dangereuse, par exemple un feu,
- une unité de commande selon la revendication 1 couplée par une technique de signalisation à l'avertisseur de danger (40),
qui est mise au point pour recevoir de l'avertisseur de danger (40) un premier signal caractérisant la situation dangereuse

13. Procédé pour faire fonctionner une centrale de signalisation de danger (1), par exemple centrale de signalisation d'intrusion, d'alarme d'incendie et/ou de commande d'extinction d'incendie, comprenant les étapes :
- d'affichage (1001) d'un affichage de repos (100) et/ou d'un affichage de message (500) au moyen d'un moyen d'affichage (20) réalisé en tant qu'écran tactile de saisie et de sortie, dans lequel l'affichage de repos (100) est affiché lorsque, pendant une durée prédéfinie, aucune interaction avec un utilisateur d'une centrale de signalisation de danger (1) et de l'unité de commande (10) n'a eu lieu, dans lequel l'affichage de message (500) est consulté par l'utilisateur lorsque celui-ci tape sur le moyen d'affichage (20) lors de l'affichage de l'affichage de repos (100) et dans lequel un nombre de messages sont affichés sur le moyen d'affichage (20) dans l'affichage de message (500), à savoir un message le plus ancien (222) et un message le plus récent (224), dans lequel d'autres messages, qui se situent dans le temps entre le message le plus ancien (222) et le message le plus récent (224), peuvent être affichés de manière déroulante spatialement entre le message le plus ancien (222) et le message le plus récent (224) ;
- d'identification (1002) d'une situation dangereuse et de génération d'un premier signal caractérisant la situation dangereuse ; et
- de réception (1003) du premier signal ; et
- d'affichage (1004), au lieu de l'affichage de repos (100) et/ou de l'affichage de message (500), d'un premier affichage d'événement, qui présente une section principale (210) et une première section de bord (220) différente de la section principale (210), disposée dans une section inférieure de la zone d'affichage, dans lequel la section principale (210) est plus grande que la première section de bord (220) et la première section de bord (220) occupe moins de 30 % d'une hauteur de la zone d'affichage, dans lequel le premier affichage d'événement (200) affiche un premier événement caractérisant la situation dangereuse dans la section principale (210) du moyen d'affichage (20), et le message le plus ancien (222) et le message le plus récent (224) dans la première section de bord (220) du moyen d'affichage (20), dans lequel l'affichage de message (500) est en outre consulté par l'utilisateur lorsque celui-ci tape sur la section principale (210) lors de l'affichage du premier affichage d'événement (200).
